# EUROPEAN PATENT APPLICATION

(11) **EP 1 980 452 A1**
(43) Date of publication of application: **15.10.2008**
(21) Application number: 08002035.7
(22) Date of filing: 04.02.2008
(51) Int. Cl.: B60R 21/015

(54) **Occupant detection apparatus, operation device control system, seat belt system, and vehicle**

(30) Priority: 12.04.2007 JP 2007105120
(71) Applicant: TAKATA CORPORATION, Minato-ku, Tokyo 106-8510 (JP)
(72) Inventor: Mita, Hirofumi, Tokyo 106-8510 (JP); Aoki, Hiroshi, Tokyo 106-8510 (JP); Yokoo, Masato, Tokyo 106-8510 (JP); Hakomori, Yuu, Tokyo 106-8510 (JP)
(74) Representative: Banzer, Hans-Jörg

(57) **Abstract**

In order to provide a technology which is effective for precisely detecting information about a rear-seat occupant (12a) sitting in a vehicle rear seat (12), an occupant detection apparatus (100) of the present invention comprises a 3D camera (112), an information extraction processing section (151) for extracting only a first image information about an upper area of a seat back of the vehicle rear seat (12) from three-dimensional images taken by the 3D camera (112) including the first image information and a second image information about areas other than the upper area (A1) of the seat back, a segmentation processing section (152) for segmenting the image information extracted by the information extraction processing section (151) into areas corresponding to respective sitting areas for a plurality of rear-seat occupants (12a) seated in the vehicle rear seat (12), an image conversion processing section (153), an image extracting section (154), and an occupant information computing section (155) for deriving, with regard to each image information segmented by the segmentation processing section (152), information about the rear-seat occupant sitting in each sitting area of the vehicle rear seat, based on the percentage of the occupant information occupying a two-dimensional image at a position spaced apart from the 3D camera (112) by a reference distance, and a determination processing section (156).

## Description

### Technical Field of the Invention

The present invention relates to an occupant detection technology to be used in a vehicle and, more particularly, a technology for detecting information about rear-seat occupants sitting in a vehicle rear seat.

### Background of the Invention

Conventionally, there are known various techniques for detecting an object occupying a vehicle seat by using a photographing means such as a camera. For example, disclosed in JP-A-2003-294855 is a configuration of a detection apparatus in which a camera capable of two-dimensionally photographing an object is arranged in front of a vehicle occupant to detect the position of the vehicle occupant by the camera.

### Disclosure of the Invention

### Problems to be solved by the Invention

By the way, with regard to a seat belt apparatus to be worn by an occupant sitting in a vehicle rear seat among seat belt apparatuses for restraining occupants by means of seat belts, there is a demand for increasing the seat belt wearing rate by rear-seat occupants. To meet the demand, it is necessary to precisely detect information about rear-seat occupants sitting in a vehicle rear seat actually. Such a technology for precisely detecting information about rear-seat occupants is effective not only for the seat belt apparatus for a rear-seat occupant but also for other driving support equipment.

However, it is difficult to precisely detect intended information about rear-seat occupants in the configuration of using a camera two-dimensionally photographing a vehicle occupant as the detection apparatus disclosed in JP-A-2003-294855 for the following reasons. That is, when there is a small difference in color between the background and a rear-seat occupant or a small difference in color between the skin and the clothes, a problem arises that it is difficult to securely detect the rear-seat occupant.

The present invention is made in view of the aforementioned point and it is an object of the present invention to provide a technology which is effective for precisely detecting information about rear-seat occupants on a vehicle rear seat.

### Means to solve the Problems

According to the invention, this object is achieved by an occupant detection apparatus as defined in claim 1 or 2, an operation device control system as defined in claim 3, a seat belt system as defined in claim 4 or a vehicle as defined in claim 7 or 8. The dependent claims define preferred and advantageous embodiments of the invention.

For achieving the object, the present invention is configured. Though the present invention is typically adapted to an occupant detection apparatus in an automobile for detecting information about rear-seat occupants sitting in a vehicle rear seat, the present invention can be also adapted to a vehicle other than an automobile.

An occupant detection apparatus of the present invention comprises at least: a photographing section, an information extraction processing section, a segmentation processing section, and a derivation processing section.

The photographing section is disposed to face to a vehicle rear seat in a vehicle cabin for taking three-dimensional images of the vehicle rear seat area. As the photographing section, a 3-D type monocular C-MOS camera, a 3-D type pantoscopic stereo camera, or a laser scanner may be employed. As the mounting place for the photographing section, any place facing to the vehicle rear seat can be selected and an area around an inner rearview mirror is typically selected. Further, the number of the photographing section(s) mounted may be one or plural, if necessary.

The "vehicle rear seat" used here widely includes various vehicle seats arranged in a rear-side portion of a vehicle. That is, the vehicle rear seat means a seat or seats of the second row from the front in case of a second-row seating configuration and seats other than seats of the first row from the front in case of a plural-row seating configuration. In addition, the "vehicle rear seat area" used here is a peripheral area of the vehicle rear seat and is typically defined as a front area and an upper area of the seat back and a head rest or an upper area of a seat cushion.

The information extraction processing section has a function of extracting only first image information from the three-dimensional images taken by the photographing section including the first image information and second image information. The first image information relates to an upper area of the seat back in the vehicle rear seat area and the second image information relates to areas other than the upper area of the seat back. This means that the first image information, that is, information except the second image information about areas other than the vehicle rear seat area and the second image information about areas other than the upper area of the seat back of the vehicle rear seat is selectively extracted. In the present invention, since the three-dimensional images containing distance information taken by the photographing section are used, it is possible to extract information according to the distance. Therefore, even when a rear-seat occupant is photographed with being partially overlapped by a front-seat occupant, image information (three-dimensional image information) of the rear-seat occupant in the seat back upper area of the vehicle rear seat can be precisely extracted.

The "upper area of a seat back" used here means an area corresponding to an upper area of the seat back among respective parts of the vehicle rear seat and is an area which is effective in obtaining information about rear-seat occupants sitting in the vehicle rear seat because this area is hardly interrupted by front-seat occupants sitting in the vehicle front seats, for example. The upper area of the seat back is typically an area defined by a horizontal plane extending through the shoulders of the occupant sitting in the vehicle rear seat, a horizontal plane extending above the head of the rear-seat occupant sitting in the vehicle rear seat, a vertical plane extending in front of the head of the rear-seat occupant sitting in the vehicle rear seat, a vertical plane extending behind the head of the rear-seat occupant sitting in the vehicle rear seat, and vertical planes extending on right and left sides of the seat back of the vehicle rear seat.

The segmentation processing section has a function of segmenting the first image information extracted by the information extraction processing section into areas relating to respective sitting areas of a plurality of rear-seat occupants sitting in the vehicle rear seat. Specifically, in case of a vehicle rear seat of which passenger capacity is two, the image information extracted by the information extraction processing section is segmented into two areas. In case of a vehicle rear seat of which passenger capacity is three, the image information extracted by the information extraction processing section is segmented into three areas. This segmentation process may be called a process of setting a characterized detection area for each sitting area.

The derivation processing section has a function of deriving, with regard to each image information segmented by said segmentation processing section, information about the rear-seat occupant sitting in each sitting area of said vehicle rear seat, based on a percentage of the occupant information occupying a two-dimensional image at a position spaced apart from the photographing section by a reference distance. Typically, this derivation process is achieved by sequentially conducting a process of extracting a two-dimensional image, a process of computing the percentage of occupant information occupying the extracted two-dimensional image, and a process of deriving information about the rear-seat occupant based on the computed percentage of the occupant information. These processes may be conducted by respective separate processing sections or by a single processing section.

The process of extracting a two-dimensional image is typically a process of converting the three-dimensional image into a two-dimensional image as seen from the front of the vehicle, the top of the vehicle, or a side of the vehicle. With regard to this process, it is preferable that the distance from the photographing section to the position where it is highly likely that a rear-seat occupant exists is set as the reference distance. In the process of computing the percentage of the occupant information occupying the extracted two-dimensional image, it is preferable to compute the percentage of the occupant information relative to the total dot number of the two-dimensional image. Accordingly, the size of the rear-seat occupant occupying the two-dimensional image is obtained. The "dot" used here is sometimes called "picture element" or "pixel" which is a colored "point" as a unit composing a digital image, and may contain information about distance (depth), degree of transparency, and the like. A digital image is represented by a sheet of image composed of square or rectangular dots which are aligned orderly lengthwise and crosswise. In the process of deriving information about the rear-seat occupant based on the computed percentage of the occupant information, it is preferable to use the result of comparing the percentage of the occupant information occupying the extracted two-dimensional image with a predetermined reference percentage or a predetermined range of percentage. The "information about the rear-seat occupant" used here widely contains the presence or absence, the size, the position, and the attitude of the rear-seat occupant. Therefore, for example, when the size of the rear-seat occupant occupying the two-dimensional image exceeds a reference value, it is determined that the rear-seat occupant is seated. On the other hand, when the size of the rear-seat occupant occupying the two-dimensional image is below the reference value, it is determined that no rear-seat occupant is seated (the seat is unoccupied).

According to the arrangement of the occupant detection apparatus of the present invention, it is possible to precisely detect information about a rear-seat occupant in each sitting area of the vehicle rear seat by conducting the respective processes based on three-dimensional images containing distance information. It is preferable that the detected information is used for controls of vehicular assist in a seat belt apparatus for restraining the rear-seat occupant by a seat belt in the event of a vehicle collision and/or an air bag apparatus for restraining the rear-seat occupant by an airbag in the event of a vehicle collision. In addition, according to this arrangement, since only image information corresponding to the seat back upper area in the vehicle rear seat is extracted from the three-dimensional image taken by the photographing section and, further, a two-dimensional image at the position spaced apart from the photographing section by the reference distance is extracted from the image information, it is effective in reducing the processing load of a series of image processes for extracting the two-dimensional image and in reducing the storing area to be required.

An occupant detection apparatus according to another aspect of the present invention comprises at least: a photographing section, an information extraction processing section, a segmentation processing section, and a derivation processing section. The photographing section, the information extraction processing section, and the segmentation processing section have the same structures as the photographing section, the information extraction processing section, and the segmentation processing section mentioned above.

The derivation processing section has a function of deriving, with regard to each image information segmented by the segmentation processing section, information about the rear-seat occupant sitting in each sitting area of the vehicle rear seat, based on a volume of a detected object in each sitting area. Typically, this derivation process is achieved by sequentially conducting a process of computing the volume of a detected object in each sitting area, and a process of deriving information about the rear-seat occupant based on the computed volume of the detected object. These processes may be conducted by respective separate processing sections or by a single processing section.

In the process of deriving information about the rear-seat occupant, it is preferable to use the result of comparing the computed volume of the detected object with a predetermined reference volume or a predetermined range of volume. The "information about the rear-seat occupant" used here widely contains the presence or absence, the size, the position, and the attitude of the rear-seat occupant.

According to the arrangement of the occupant detection apparatus of the present invention, it is possible to precisely detect information about a rear-seat occupant in each sitting area of the vehicle rear seat by conducting the respective processes based on three-dimensional images containing distance information. It is preferable that the detected information is used for controls of a vehicular assist in a seat belt apparatus for restraining the rear-seat occupant by a seat belt in the event of a vehicle collision and/or an air bag apparatus for restraining the rear-seat occupant by an airbag in the event of a vehicle collision. In addition, according to this arrangement, since only image information corresponding to the seat back upper area in the vehicle rear seat is extracted from the three-dimensional image taken by the photographing section and, further, the volume of the detected object in each sitting area is derived from the image information, it is effective in reducing the processing load of a series of image processes for extracting the two-dimensional image and in reducing the storing area to be required.

An operation device control system of the present invention comprises an occupant information detector for detecting information about a rear-seat occupant sitting in a vehicle rear seat; and an operation device which is actuated according to the detection result of the occupant information detector. In the operation device control system, the occupant information detector is composed of an occupant detection apparatus as mentioned above and the operation device is actuated according to the information derived by the derivation processing section of the occupant detection apparatus. Specifically, the operation device may be a component of a seat belt apparatus for restraining the rear-seat occupant by a seat belt in the event of a vehicle collision, a component of an airbag apparatus for restraining the rear-seat occupant by an airbag which deploys in front of or on a side of the rear-seat occupant in the event of a vehicle collision, and/or a component of a device which rises a seat cushion of the vehicle rear seat in the event of a vehicle collision in order to prevent a phenomenon that the rear-seat occupant tends to slide along the seat surface below the seat belt, so-called "submarine phenomenon".

According to the arrangement of the operation device control system of the present invention, the operation device can be actuated based on the precisely detected information about a rear-seat occupant in the vehicle rear seat so that this arrangement is effective for suitably actuating the operation device.

A seat belt system which is installed in a vehicle comprises: at least an occupant detection apparatus as mentioned above; a seat belt which can be worn by a rear seat occupant sitting in a vehicle rear seat for restraining the rear-seat occupant, a seat belt buckle which is installed in each sitting area of the vehicle rear seat; a tongue which is attached to the seat belt and is latched with the seat belt buckle during a seat belt wearing state; and an informing section. The informing section of the seat belt system has a function of informing of the position of at least either of the seat belt buckle and the tongue for each sitting area when the rear-seat occupant is sitting in the sitting area of the vehicle rear seat, based on information derived by the derivation processing section of the occupant detection apparatus. Specifically, the position of the seat belt buckle and/or the tongue corresponding to the rear-seat occupant sitting in the vehicle rear seat is informed by the informing section. As the arrangement of the informing section, means of lightening the seat belt buckle itself and/or the tongue itself, protruding the seat belt buckle, sending out the tongue, sliding the tongue up and down, or displaying on a monitor panel may be employed.

According to the arrangement of the seat belt system of the present invention, the rear-seat occupant sitting in the vehicle rear seat can be informed of the existence of the seat belt buckle and/or the tongue while using the precisely detected information about a rear-seat occupant in the vehicle rear seat. This can increase the recognition of the existence of the seat belt buckle and/or the tongue and is thus effective in increasing a seat belt wearing rate by rear-seat occupants.

In a seat belt system of a further aspect of the present invention, the informing section has a function of informing of the positions of the seat belt buckle and the tongue which are correctly latched with each other during the normal seat belt wearing state.

According to the arrangement of the seat belt system of the present invention, it can prevent wrong latching such as a case that the tongue for the left side rear-seat occupant is latched with the seat belt buckle for the right side rear-seat occupant, thereby fulfilling the primary occupant restraining function of the seat belt.

A seat belt system of another aspect of the present invention comprises: at least an occupant detection apparatus as mentioned above; a seat belt which can be worn by a rear seat occupant sitting in a vehicle rear seat for restraining the rear-seat occupant; a seat belt buckle which is installed in each sitting area of the vehicle rear seat; a tongue which is attached to the seat belt and is latched with the seat belt buckle during the seat belt wearing state; a buckle detecting sensor for detecting that the tongue is latched with the seat belt buckle; and an output section. The output section in the seat belt system has a function of outputting the wearing completion of the seat belt installed in each sitting area where an occupant is sitting, based on a determination result by a determination processing section of the occupant detection apparatus and the detection result by the buckle detecting sensor. The output section is composed of a monitor panel or a meter panel capable of displaying the detection result or a speaker for outputting voice guidance.

According to the arrangement of the seat belt system of the present invention, it can urge front-seat occupants including a driver and the rear-seat occupant(s) to wear the seat belt when the rear-seat occupant(s) sitting in the vehicle rear seat does not wear the seat belt while using the precisely detected information about rear-seat occupant(s) in the vehicle rear seat. This is effective in increasing the seat belt wearing rate by rear-seat occupants.

A vehicle of the present invention comprises: at least an engine/running system; an electrical system; a vehicle control device; and an operation device control system as mentioned above.

The engine/running system is a system involving an engine and a running mechanism of the vehicle. The electrical system is a system involving electrical parts used in the vehicle. The vehicle control device is a device having a function of controlling the actuation of the engine/running system and the electrical system.

According to the arrangement of the vehicle of the present invention, the operation device is actuated based on the precisely detected information about the rear-seat occupant in the vehicle rear seat. Therefore, this arrangement is effective in suitably actuating the operation device.

A vehicle of another aspect of the present invention comprises: at least an engine/running system; an electrical system; a vehicle control device, and a seat belt apparatus.

The engine/running system is a system involving an engine and a running mechanism of the vehicle. The electrical system is a system involving electrical parts used in the vehicle. The vehicle control device is a device having a function of controlling the actuation of the engine/running system and the electrical system. The seat belt apparatus has a function of restraining a rear-seat occupant sitting in a vehicle rear seat by a seat belt and is composed of a seat belt system as mentioned above.

According to the arrangement of the vehicle of the present invention, a vehicle can be provided which is provided with a seat belt apparatus capable of conducting controls using precisely detected information about rear-seat occupant(s) in the vehicle rear seat by conducting respective processes based on three-dimensional images taken by the photographing section.

### Effects of the Invention

As described above, the present invention enables precise detection of information about rear-seat occupants on a vehicle rear seat.

### Brief Explanation of the drawings

Fig. 1 is an illustration showing a system configuration of an occupant detection apparatus 100 to be installed in a vehicle according to an embodiment.

Fig. 2 is an illustration showing an example of image taken by the 3D camera 112 of the embodiment.

Fig. 3 is an illustration showing an area A1 defined as an upper area of a seat back by an information extraction processing section 151 of this embodiment.

Fig. 4 is an illustration showing aspects in the process by the segmentation processing section 152 of the embodiment.

Fig. 5 is an illustration showing aspects in the process by the image conversion processing section 153 and the image extracting section 154 of the embodiment.

Fig. 6 is an illustration showing an aspect in the process by the occupant information computing section 155 of the embodiment.

Fig. 7 is an illustration showing the arrangement of a computing unit 160 according to another embodiment.

Fig. 8 is an illustration showing a structure of a vehicle to which the occupant detection apparatus 100 shown in Fig. 1 is installed.

### Best Modes for carrying out the Invention

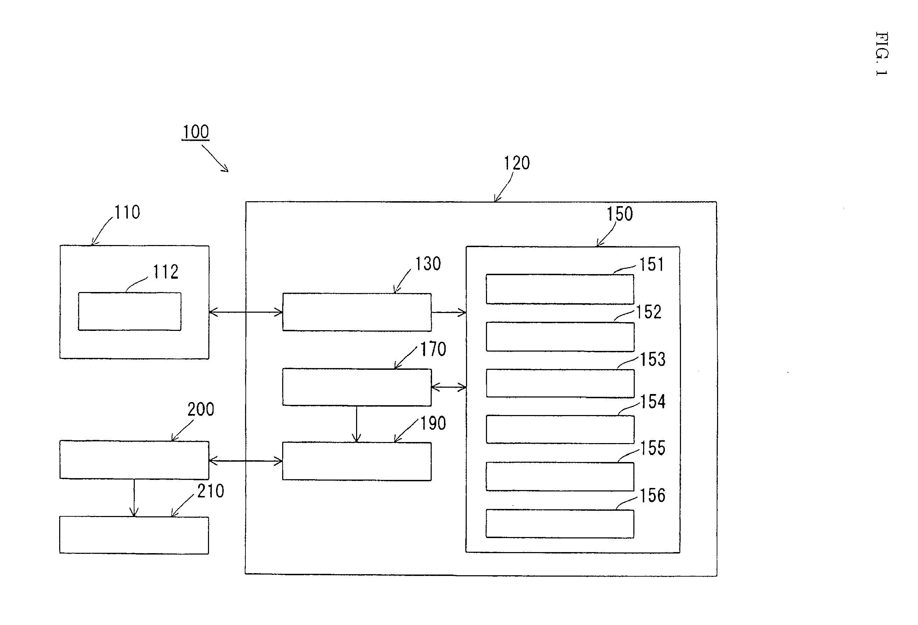

Hereinafter, embodiments of the present invention will be described with reference to drawings. First, an occupant detection apparatus 100 as an embodiment of "occupant detection apparatus" of the present invention will be described with reference to Fig. 1.

The system configuration of an occupant detection apparatus 100, which is installed in a vehicle, of this embodiment is shown in Fig. 1. As shown in Fig. 1, the occupant detection apparatus 100 of this embodiment is installed in an automobile as the "vehicle" of the present invention for detecting information about a rear-seat occupant and mainly comprises a photographing means 110 and a control means 120. Further, the occupant detection apparatus 100 cooperates together with an ECU 200, as an actuation control device for the vehicle, and an operation device 210 to compose a certain vehicle aiding system (corresponding to the "operation apparatus control system" and "seat belt system" of the present invention). The vehicle comprises at least, but not shown, an engine/running system involving an engine and a running mechanism of the vehicle (corresponding to "engine/running system" of the present invention), an electrical system involving electrical parts used in the vehicle (corresponding to "electrical system" of the present invention), and a vehicle control device (ECU 200) for conducting the actuation control of the engine/running system and the electrical system. The vehicle control device in this case corresponds "vehicle control device" of the present invention.

The photographing means 110 of this embodiment comprises a 3D camera 112 as the photographing device and a data transfer circuit. The 3D camera 112 is a 3-D (three-dimensional) camera (sometimes called "monitor") of a C-MOS or CCD (charge-coupled device) type in which light sensors are arranged into an array (lattice) structure. By this camera, three-dimensional images can be taken from a single view point. Thus, distance relative to the object is measured a plurality of times to detect a three-dimensional surface profile, thereby identifying the presence or absence, the size, the position, and the attitude of the detected object. As the 3D camera 112, a 3-D type monocular C-MOS camera or a 3-D type pantoscopic stereo camera may be employed. The photographing means 110 (the 3D camera 112) corresponds to the "photographing section which is disposed to face to a vehicle rear seat in a vehicle cabin for taking three-dimensional images" of the present invention. Instead of the 3D camera 112, a laser scanner capable of obtaining three-dimensional images may be employed.

The camera 112 of this embodiment is mounted to an area around an inner rearview mirror, an area around a side mirror, a central portion in the lateral direction of a dashboard, or the like of the automobile in such a manner as to face a predetermined range for movement in a rear portion of the vehicle cabin. The "predetermined range for movement" used here may be typically defined as an area where the head and the upper body of an occupant sitting in the vehicle rear seat may exist (a seat back upper area) in an accommodation area in the vehicle cabin. This range may include front-seat occupant(s) and front seat(s). By using the 3D camera 112, information about a rear-seat occupant sitting in the vehicle rear seat is measured periodically a plurality of times.

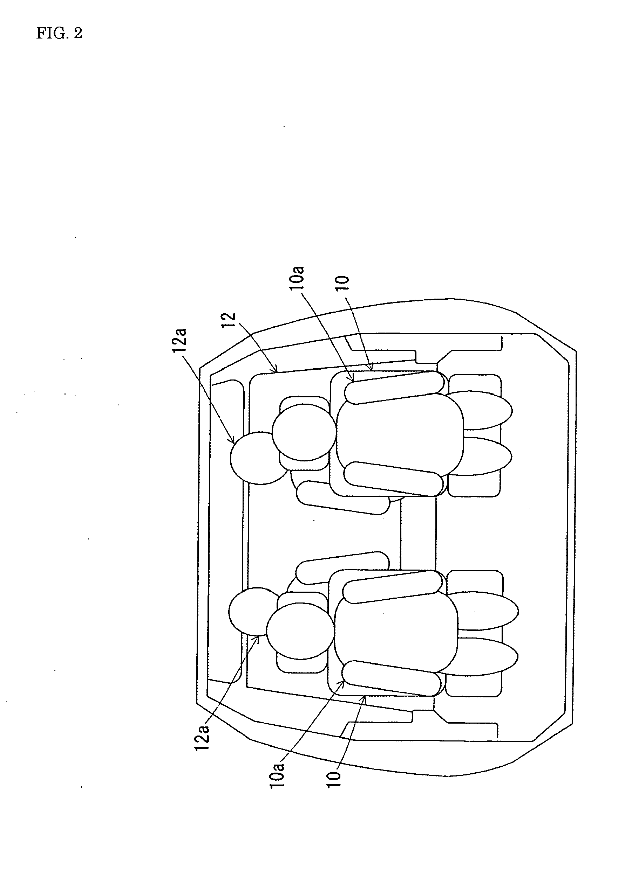

An image photographed by the 3D camera 112 is referred to Fig. 2. Fig. 2 shows an example of an image photographed by the 3D camera 112 of this embodiment. In the example shown in Fig. 2, there are front-seat occupants 10a sitting in vehicle front seats 10 and rear-seat occupants 12a sitting in a vehicle rear seat 12 behind the front-seat occupants 10a so that the rear-seat occupants are shown partially. The vehicle rear seat 12 is a seat or seats of the second row from the front in case of a second-row seating configuration and seats other than seats of the first row from the front in case of a plural-row seating configuration.

Mounted on the occupant detection apparatus 100 of this embodiment is a power source unit for supplying power from a vehicle buttery to the 3D camera 112, but not shown. The camera 112 is set to start its photographing operation when the ignition key is turned ON or when a seat sensor (not shown) installed in the driver seat detects an occupant sitting in the driver seat.

The control means 120 of this embodiment further comprises at least an image processing unit 130, a computing unit (MPU) 150, a storing unit 170, an input/output unit 190, and peripheral devices (not shown). The control means 120 is configured as an occupant information processing unit (CPU) for processing the information about occupants based on images taken by the 3D camera 112.

The image processing unit 130 is a means for controlling the camera to obtain good quality images and for controlling the image processing for processing images taken by the 3D camera 112 to be used for analysis. Specifically, as for the control of the camera, the adjustment of the frame rate, the shutter speed, and the sensitivity, and the accuracy correction are conducted to control the dynamic range, the brightness, and the white balance. As for the control of the image processing, the spin compensation for image, the correction for distortion of the lens, the filtering operation, and the difference operation as image preprocessing operations are conducted and the configuration determination and the trucking as image recognition processing operations are conducted.

The computing unit 150 of this embodiment comprises at least an information extraction processing section 151, a segmentation processing section 152, an image conversion processing section 153, an image extracting section 154, an occupant information computing section 155, and a determination processing section 156. As for the computing unit 150, two or more of the information extraction processing section 151, the segmentation processing section 152, the image conversion processing section 153, the image extracting section 154, the occupant information computing section 155, and the determination processing section 156 may be suitably combined according to the arrangement or function.

The information extraction processing section 151 as a component of the computing unit 150 carries out a process of extracting information about the rear-seat occupants sitting in the vehicle rear seat based on the information from the image processing unit 130. The information extraction processing section 151 corresponds to the "information extraction processing section" of the present invention.

The information extraction processing section 151 extracts (derives) only the first image information from the three-dimensional image of the image processing unit 130, including the first image information and second image information. The first image information relates to an upper area of the seat back in the vehicle rear seat area and the second image information relates to areas other than the upper area of the seat back. This means that the first image information, that is, information except the second image information about areas other than the vehicle rear seat area and the second image information about areas other than the upper area of the seat back is selectively extracted. The "vehicle rear seat area" used here is a peripheral area of the vehicle rear seat 12 and is typically defined as a front area and an upper area of the seat back and a head rest or an upper area of a seat cushion. In the information extraction processing section 151, it is preferable to digitalize a three-dimensional surface profile detected by the 3D camera 112 by converting the surface profile into a coordinate system as a numerical coordinate. As the coordinate system, various coordinate systems such as an orthogonal coordinate system, a polar coordinate system, a nonorthogonal coordinate system, and a generalized coordinate system may be used.

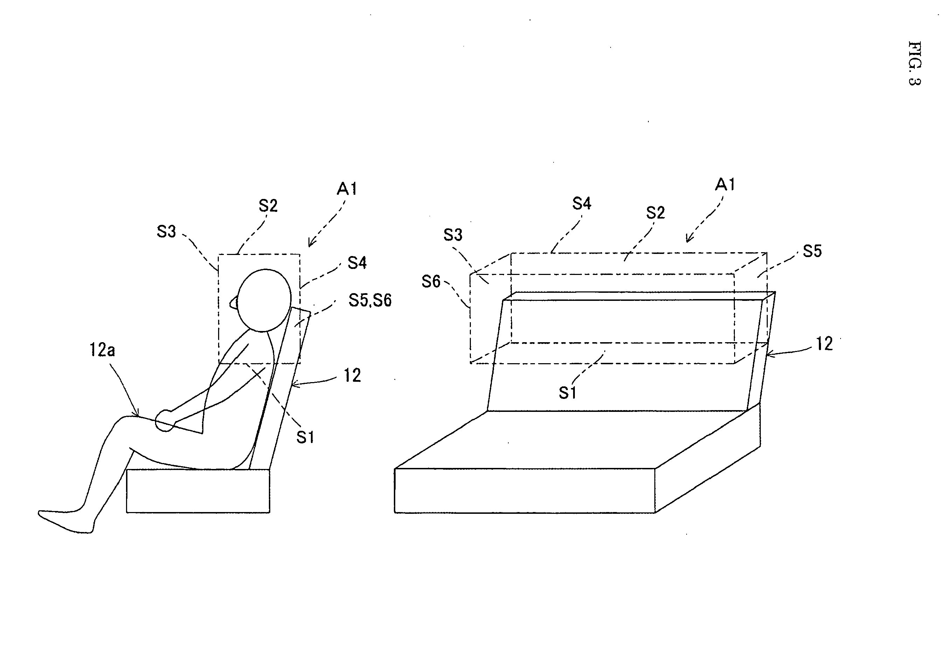

The description about the seat back upper area of the vehicle rear seat 12 will be made as regard to Fig. 3. Fig. 3 shows an area A1 to be defined as the seat back upper area by the information extraction processing section 151 of this embodiment. The area A1 shown in Fig. 3 is an area which is defined by a horizontal plane S1 extending through the shoulders of the occupant sitting in the vehicle rear seat 12, a horizontal plane S2 extending above the head of the rear-seat occupant sitting in the vehicle rear seat 12, a vertical plane S3 extending in front of the head of the rear-seat occupant sitting in the vehicle rear seat 12, a vertical plane S4 extending behind the head of the rear-seat occupant sitting in the vehicle rear seat 12, and vertical planes S5, S6 extending on right and left sides of the seat back of the vehicle rear seat 12.

The segmentation processing section 152 as a component of the computing unit 150 has a function of segmenting the image information (the first image information of the seat back upper area) extracted by the information extraction processing section 151 into areas for respective occupants sitting in the vehicle rear seat. The segmentation processing section 152 corresponds to the "segmentation processing section" of the present invention.

Specifically, in case of a vehicle rear seat of which passenger capacity is two, the segmentation processing section 152 segments the image information extracted by the information extraction processing section 151 into two areas. In case of a vehicle rear seat of which passenger capacity is three, the segmentation processing section 152 segments the image information extracted by the information extraction processing section 151 into three areas. It should be understood that the information about the passenger capacity of the vehicle rear seat of the subject vehicle is previously stored in the storing unit 170. This segmentation process may be called a process of setting a characterized detection area for each sitting area.

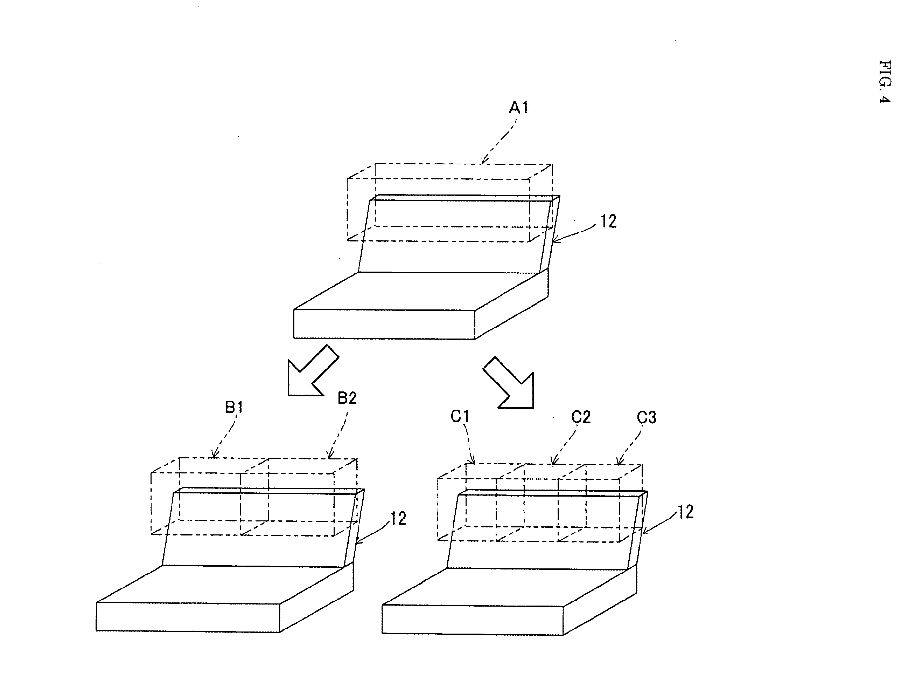

The process by the segmentation processing section 152 will be further described with reference to Fig. 4. Fig. 4 shows aspects in the process by the segmentation processing section 152 of this embodiment. As shown in Fig. 4, in case of a process for segmenting the image information extracted by the information extraction processing section 151 into two areas, the area A1 is segmented into two areas, i.e. segmented areas B1 and B2. In case of a process for segmenting the image information extracted by the information extraction processing section 151 into three areas, the area A1 is segmented into three areas, i.e. segmented areas C1 through C3. The segmented areas formed by segmenting the area A1 are assumed as detection areas where features of a rear-seat occupant can be detected.

The image conversion processing section 153 as a component of the computing unit 150 has a function of converting the image information (three-dimensional information) in each segmented area obtained by the segmentation processing section 152 into a two-dimensional image as seen from the front of the vehicle. If necessary, instead of the two-dimensional image as seen from the front of the vehicle, a two-dimensional image as seen from the top of the vehicle or a two-dimensional image as seen from a side of the vehicle may be employed.

The image extracting section 154 as a component of the computing unit 150 has a function of extracting (distilling) a two-dimensional image at a position spaced apart from the 3D camera 112 by a reference distance from the two-dimensional image converted by the image conversion processing section 153. With regard to this process, it is preferable that the distance from the 3D camera 112 to the position where it is highly likely that a rear-seat occupant exists is set as the reference distance and is stored in the storing unit 170.

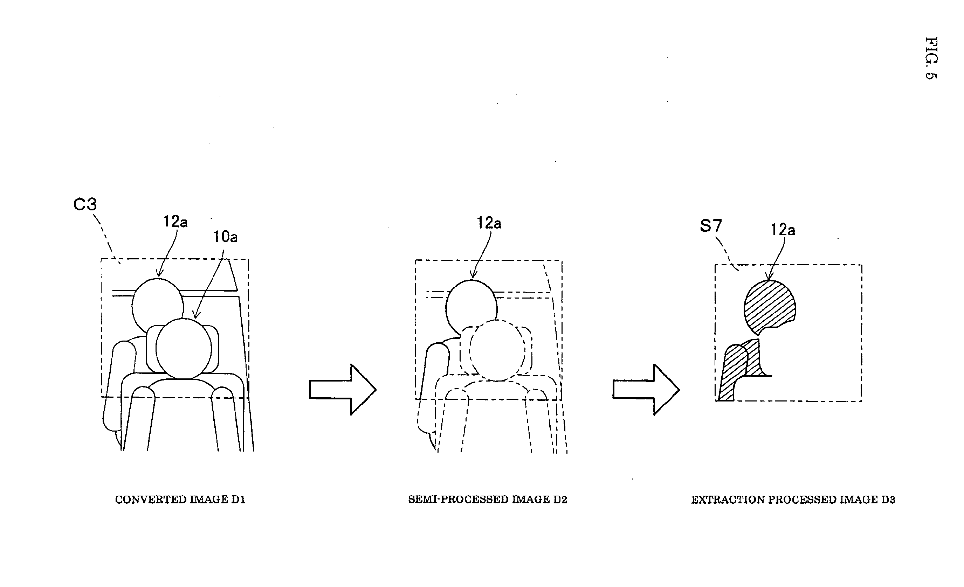

The specific processes in the image conversion processing section 153 and the image extracting section 154 will be understood with reference to Fig. 5. Fig. 5 shows aspects of the processes by the image conversion processing section 153 and the image extracting section 154 of this embodiment. As the image conversion processing section 153 converts the image information (three-dimensional information) in the segmented area C3 obtained by the segmentation processing section 152 into a two-dimensional image as seen from the front of the vehicle, an image such as a converted image D1 as shown in Fig. 5 is obtained. As the image extracting section 154 extracts an image at the position spaced apart from the 3D camera 112 by the reference distance from the converted image D1, an extraction processed image (two-dimensional image) D3 of a reference plane S7 is obtained through a semi-processed image D2.

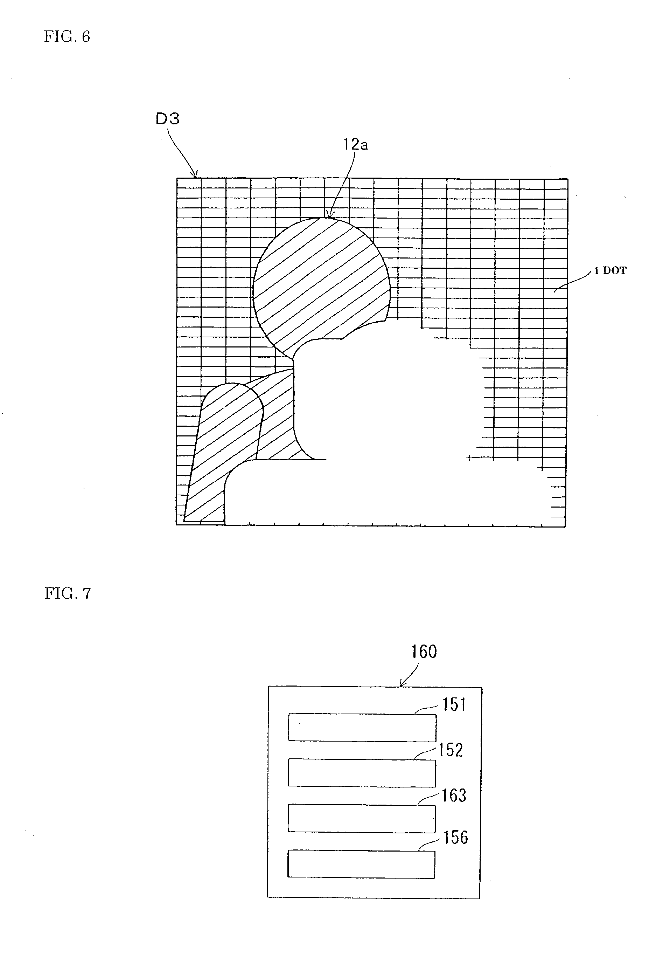

The occupant information computing section 155 as a component of the computing unit 150 has a function of computing a percentage of an occupant information occupying the two-dimensional image extracted by the image extracting section 154. The process conducted by the occupant information computing section 155 will be described with reference to Fig. 6. Fig. 6 shows an aspect in the process by the occupant information computing section 155 of this embodiment. As shown in Fig. 6, the occupant information computing section 155 computes the percentage of the occupant information relative to the total dot number (for example, 16 x 35 dots) of the extraction processed image D3 in Fig. 5. Accordingly, the size of the rear-seat occupant occupying the extraction processed image D3 is obtained. The "dot" used here is sometimes called "picture element" or "pixel" which is a colored "point" as a unit composing a digital image, and may contain information about distance (depth), degree of transparency, and the like. A digital image is represented by a sheet of image composed of square or rectangular dots which are aligned orderly lengthwise and crosswise.

The determination processing section 156 as a component of the computing unit 150 has a function of determining based on the information computed by the occupant information computing section 155 whether or not the detected object detected in each segmented area includes a rear-seat occupant. Specifically, when the percentage of the occupant information relative to the total dot number of the extraction processed image D3 exceeds a reference value, the determination processing section 156 determines that a rear-seat occupant is seated. On the other hand, when the percentage is below the reference value, the determination processing section 156 determines that no rear-seat occupant is seated (the seat is unoccupied). This determination process and the processes to be conducted prior to the determination process (the processes by the image conversion processing section 153, the image extracting section 154, and the occupant information computing section 155) are conducted for every segmented area of the two or three segmented areas obtained by the segmentation processing section 152. The determination processing section 156, the image conversion processing section 153, the image extracting section 154, and the occupant information computing section 155 as mentioned above cooperate together to compose "derivation processing section" of the present invention. It should be noted that the determination processing section 156 may be adapted to determine, based on the information computed by the occupant information computing section 155, the size, position, and/or attitude of the rear-seat occupant in addition to or instead of the presence or absence of the rear-seat occupant, if required.

The storing unit 170 of this embodiment is a means for storing (recording) data for correction, buffer frame memory for preprocessing, defined data for recognition computing, reference patterns, and the computed results of the computing unit 150 as well as an operation control software.

The input/output unit 190 of this embodiment inputs information about the vehicle, information about traffic conditions around the vehicle, information about weather condition and about time zone as well as the determination results by the determination processing section 156 to the ECU 200 for conducting controls of the entire vehicle and outputs recognition results. As the information about the vehicle, there are, for example, collision prediction information of the vehicle by a radar or camera, the state (open or closed) of a vehicle door, the wearing of the seat belt, the operation of brakes, the vehicle speed, and the steering angle. In this embodiment, based on the information outputted from the input/output unit 190, the ECU 200 outputs actuation control signals to the operation device 210. The input/output unit 190 may be of any structure capable of outputting a control signal to the operation device 210. As shown in Fig. 1, the input/output unit 190 may output a control signal to the operation device 210 indirectly through the ECU 200 or may directly output a control signal to the operation device 210. The operation device 210 corresponds to "operation device" of the present invention.

According to the occupant detection apparatus 100 of this embodiment, as mentioned above, it is possible to precisely detect information about the rear-seat occupant(s) sitting in the vehicle rear seat 12 by conducting the respective processes based on three-dimensional images taken by the 3D camera 112. That is, in case of using three-dimensional images containing distance information, it ensures high degree of precision in detection as compared to the case of using two-dimensional images because information can be extracted according to distances even when there is a small difference in color between the background and the rear-seat occupant or a small difference in color between the skin and the clothes.

In this embodiment, since only first image information about the seat back upper area in the vehicle rear seat 12 is extracted from information including the first image information and second image information about the areas other than the vehicle rear seat area and, further, a two-dimensional image at the position spaced apart from the 3D camera 112 by the reference distance is extracted from the first image information, it is effective in reducing the processing load of a series of image processes for extracting the two-dimensional image and in reducing the storing area to be required.

As the computing unit 150, another arrangement may be employed. For example, a computing unit 160 employing a volume computing section 163 instead of the image conversion processing section 153, the image extracting section 154, and the occupant information computing section 155 may be employed. The arrangement of the computing unit 160 of the different embodiment is shown in Fig. 7. The volume computing section 163 shown in Fig. 7 has a function of computing the volume of the detected object in each sitting area based on the image information (three-dimensional information) about each segmented area obtained by the segmentation processing section 152. The determination processing section 156 determines based on the volume of the detected object computed by the volume computing section 163 whether or not the detected object detected in each segmented area includes a rear-seat occupant. Specifically, when the computed volume of the detected object exceeds a reference value, the determination processing section 156 determines that a rear-seat occupant is seated. On the other hand, when the volume is below the reference value, the determination processing section 156 determines that no rear-seat occupant is seated (the seat is unoccupied). This determination process and the volume computing process as the process to be conducted prior to the determination process are conducted for every segmented area of the two or three segmented areas obtained by the segmentation processing section 152. The determination processing section 156 and the volume computing section 163 cooperate together to compose "derivation processing section" of the present invention. Also the computing unit 160 having the aforementioned arrangement can exhibit the same works and effects as the case of using the computing unit 150.

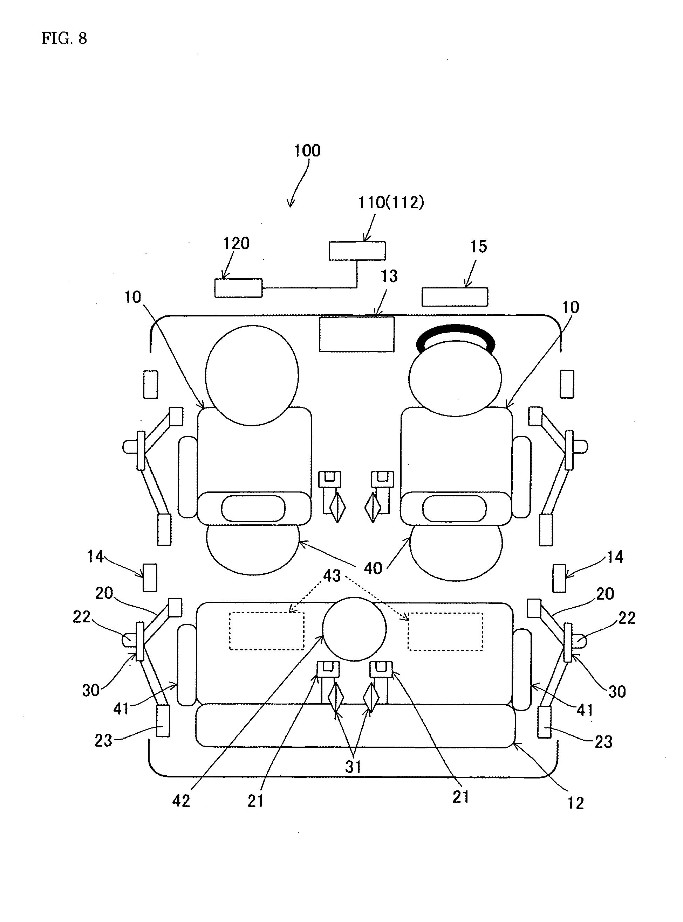

The operation device 210 of this embodiment is used as a component of seat belt apparatuses of the following embodiments or an airbag apparatus. The seat belt apparatus and the airbag apparatus used here correspond to "operation device control system" of the present invention. Especially, the seat belt apparatus corresponds to "seat belt system" of the present invention. Specific embodiments of the seat belt apparatus and the airbag apparatus will be described with reference to Fig. 8. Fig. 8 shows a structure of a vehicle to which the occupant detection apparatus 100 shown in Fig. 1 is installed.

As a first embodiment, a first seat belt apparatus is provided which has an informing mechanism of informing the rear-seat occupant of the positions of a seat belt buckle 21 and a tongue 22 for a seat belt 20 worn by the rear-seat occupant or the selection of the seat belt buckle 21 and the tongue 22, using information about the rear-seat occupant (the presence or absence of occupant, the seated position of the occupant) or information about the getting on/off of the occupant and the information about opening/closing of a vehicle door. In the informing mechanism, the informing action may be carried out by lightening the seat belt buckle 21 itself and the tongue 22 itself, protruding the seat belt buckle 21, sending out the tongue 22, sliding the tongue 22 up and down, or displaying on a monitor panel 13. The informing mechanism used here can compose the "informing section" of the present invention. It should be noted that the information about opening/closing of the vehicle door is detected by a vehicle door sensor 14.

By using the seat belt apparatus having the aforementioned structure, the rear-seat occupant sitting in the vehicle rear seat can be informed of the existence of the seat belt buckle and the tongue. This can increase the recognition of the existence of the seat belt buckle and the tongue and is thus effective in increasing the seat belt wearing rate by rear-seat occupants.

As a second embodiment, a second seat belt apparatus is provided which has an informing mechanism of informing a driver of the seat belt wearing completion (wearing state) of the rear-seat occupant, using information about the rear-seat occupant (the presence or absence of the occupant, the seated position of the occupant). In the informing mechanism, the informing action may be carried out by displaying on the monitor panel 13 or a meter panel 15 or outputting voice guidance from a speaker. The informing mechanism used here can compose the "informing section" of the present invention.

By using the seat belt apparatus having the aforementioned structure, it can urge front-seat occupants including the driver and the rear-seat occupant(s) to wear the seat belt when the rear-seat occupant(s) sitting in the vehicle rear seat does not wear the seat belt.

As a third embodiment, a third seat belt apparatus is provided which has an informing mechanism of informing the driver or the rear-seat occupant of whether or not a tongue 22 is latched with a right seat belt buckle 21, using information about the rear-seat occupant (the presence or absence of the occupant, the seated position of the occupant). In the informing mechanism, the informing action may be carried out by displaying on the monitor panel 13 or a meter panel 15 or voice output, or lightening or vibrating a certain portion. The informing mechanism used here can compose the "informing section" of the present invention.

By using the seat belt apparatus having the aforementioned structure, it can prevent wrong latching such as a case that the tongue for the left side rear-seat occupant is latched with the seat belt buckle for the right side rear-seat occupant, thereby fulfilling the primary occupant restraining function of the seat belt.

As a fourth embodiment, a fourth seat belt apparatus is provided which has a seat belt wearing promoting function for urging the rear-seat occupant to wear the seat belt 20, using information about the rear-seat occupant (the presence or absence of the occupant, the seated position of the occupant). The seat belt wearing promoting function may be carried out by protruding the seat belt buckle 21, sending out the tongue 22, or driving another member (seat belt reacher) acting on the seat belt 20 by a driving device 30 or 31. By using the seat belt apparatus having the aforementioned structure, it is possible to actively urge the rear-seat occupant to wear the seat belt 20.

The seat belt 20, the seat belt buckle 21 and the tongue 22 of each of the seat belt apparatuses as mentioned above correspond to "seat belt", "seat belt buckle" and "tongue" of the present invention, respectively.

As a fifth embodiment, a fifth seat belt apparatus is provided which actuates a pretensioner 23 for winding up the seat belt 20 to remove any slack of the seat belt 20 in the event of a vehicle collision, using information about the rear-seat occupant (the presence or absence of the occupant, the seated position of the occupant) and, as another information, information about latching between the seat belt buckle and the tongue. By using the seat belt apparatus as mentioned above, the pretensioner 23 can be suitably actuated to wind up the seat belt 20 to remove the slack of the seat belt 20 in the event of a vehicle collision, thereby improving the occupant restraining property by the seat belt.

As a sixth embodiment, an operation device is provided which has a function of actuating an airbag or the like for restraining a rear-seat occupant, using information about the rear-seat occupant (the presence or absence of the occupant, the seated position of the occupant). The operation device may be composed of an airbag 40 which is disposed in a portion under the vehicle front seat 10 or in a cabin ceiling and can be deployed in front of the rear-seat occupant in the event of a vehicle collision, a side airbag 41 which can be deployed at a door side of the rear-seat occupant in the event of a vehicle collision, or an intermediate airbag 42 which can be deployed between the rear-seat occupants in the event of a vehicle collision. Further, the operation device may be composed of a limiting device 43 which rises a seat cushion of the vehicle rear seat 12 by an airbag or another actuating mechanism in order to prevent a phenomenon that the rear-seat occupant tends to slide along the seat surface below the seat belt, so-called "submarine phenomenon", or a device which provides a curtain-like member between the vehicle front seats 10 and the vehicle rear seat 12 to partition them in order to prevent the rear-seat occupant and/or an object such as baggage from moving forward. By using the operation device as mentioned above, an occupant restraining means such as the airbag 40 and a side airbag 41 can be properly actuated in the event of a vehicle collision, thereby improving the occupant restraint property.

As another embodiment, there may be provided a device for locking the seat belt when a child seat is attached or a device for informing thereof, using information about the rear-seat occupant (the presence or absence of the occupant, the seated position of the occupant), and/or a device for locking a door when a small-size occupant such as a child is seated or when a child seat is attached or a device for informing thereof, using the aforementioned information about the rear-seat occupant.

According to the occupant detection apparatus 100 of this embodiment as mentioned above, there can be provided a seat belt apparatus and/or an airbag apparatus capable of controlling by using information about the rear-seat occupant in the vehicle rear seat 12 precisely detected by the respective processes based on the three-dimensional images taken by the 3D camera 112. In addition, there can also be provided a vehicle to which such a seat belt apparatus and/or such an airbag apparatus are installed.

### Other Embodiments

The present invention is not limited to the aforementioned embodiments and various applications and modifications may be made. For example, the following respective embodiments based on the aforementioned embodiments may be carried out.

Though the aforementioned embodiments have been described with regard to the arrangement of the occupant detection apparatus 100 to be installed in an automobile, the present invention can be adapted to occupant detection apparatuses to be installed in various vehicles such as an automobile, an airplane, a boat, a bus, and a train.

## Claims

1. An occupant detection apparatus comprising:
a photographing section (110) which is disposed to face to a vehicle rear seat (12) in a vehicle cabin for taking three-dimensional images of the vehicle rear seat area;
an information extraction processing section (151) which extracts only a first image information about an upper area (A1) of a seat back of said vehicle rear seat area from the three-dimensional images taken by said photographing section (110) including the first image information and a second image information about areas other than said upper area (A1) of said seat back;
a segmentation processing section (152) which segments the first image information extracted by said information extraction processing section (151) into areas (B1, B2; C1-C3) relating to respective sitting areas of a plurality of rear-seat occupants (12a) sitting in said vehicle rear seat (12); and
an derivation processing section (153-156) which derives, with regard to each image information segmented by said segmentation processing section (152), information about the rear-seat occupant (12a) sitting in each sitting area (B1, B2; C1-C3) of said vehicle rear seat (12), based on a percentage of an occupant information occupying a two-dimensional image (D3) at a position spaced apart from said photographing section (110) by a reference distance.

2. An occupant detection apparatus comprising:
a photographing section (110) which is disposed to face to a vehicle rear seat (12) in a vehicle cabin for taking three-dimensional images of the vehicle rear seat area;
an information extraction processing section (151) which extracts only a first image information about an upper area (A1) of a seat back of said vehicle rear seat area from the three-dimensional images taken by said photographing section (110) including the first image information and a second image information about areas other than said upper area (A1) of said seat back;
a segmentation processing section (152) which segments the first image information extracted by said information extraction processing section (151) into areas (B1, B2; C1-C3) relating to respective sitting areas of a plurality of rear-seat occupants (12a) sitting in said vehicle rear seat (12); and
a derivation processing section (156, 163) which derives, with regard to each image information segmented by said segmentation processing section (152), information about the rear-seat occupant (12a) sitting in each sitting area (B1, B2; C1-C3) of said vehicle rear seat (12), based on a volume of a detected object in each sitting area (B1, B2; C1-C3).

3. An operation device control system comprising:
an occupant information detector for detecting information about a rear-seat occupant (12a) sitting in a vehicle rear seat (12); and
an operation device (210) which is actuated according to the detection result of said occupant information detector, wherein
said occupant information detector is composed of an occupant detection apparatus (100) as claimed in claim 1 or 2 and said operation device (210) is actuated according to the information derived by said derivation processing section (153-156; 156, 163) of said occupant detection apparatus (100).

4. A seat belt system which is installed in a vehicle, comprising:
an occupant detection apparatus (100) as claimed in claim 1 or 2;
a seat belt (20) which can be worn by a rear-seat occupant (12a) sitting in a vehicle rear seat (12) for restraining the rear-seat occupant (12a);
a seat belt buckle (21) which is installed in each sitting area of said vehicle rear seat (12);
a tongue (22) which is attached to said seat belt (20) and is latched with said seat belt buckle (21) during the seat belt wearing state; and
an informing section (13; 15) for informing of the position of at least either of said seat belt buckle (21) and said tongue (22) for each sitting area of said vehicle rear seat (12) when it is determined that the rear-seat occupant (12a) is sitting in the sitting area of said vehicle rear seat (12) based on the information derived by said derivation processing section (153-156; 156, 163) of said occupant detection apparatus (100).

5. A seat belt system as claimed in claim 4, wherein
said informing section (13; 15) informs of the positions of said seat belt buckle (21) and said tongue (22) which are correctly latched with each other during the normal seat belt wearing state.

6. A seat belt system which is installed in a vehicle, comprising:
an occupant detection apparatus (100) as claimed in claim 1 or 2;
a seat belt (20) which can be worn by a rear seat occupant (12a) sitting in a vehicle rear seat (12) for restraining the rear-seat occupant (12a);
a seat belt buckle (21) which is installed in each sitting area of said vehicle rear seat (12);
a tongue (22) which is attached to said seat belt (20) and is latched with said seat belt buckle (21) during the seat belt wearing state;
a buckle detecting sensor for detecting that said tongue (22) is latched with said seat belt buckle (21); and
an output section (190) for outputting the wearing completion of said seat belt (20), based on the information derived by said derivation processing section (153-156; 156, 163) of said occupant detection apparatus (100) and the detection result by said buckle detecting sensor.

7. A vehicle comprising:
an engine/running system;
an electrical system;
a vehicle control device (200) for controlling the actuation of said engine/running system and said electrical system; and
an operation device control system as claimed in claim 3.

8. A vehicle comprising:
an engine/running system;
an electrical system;
a vehicle control device (200) for controlling the actuation of said engine/running system and said electrical system; and
a seat belt apparatus for restraining a rear-seat occupant (12a) sitting in a vehicle rear seat (12) by a seat belt (20), wherein
said seat belt apparatus is a seat belt apparatus as claimed in any one of claims 4 through 6.
